# EUROPEAN PATENT APPLICATION

(11) **EP 1 438 901 A1**
(43) Date of publication of application: **21.07.2004**
(21) Application number: 03030019.8
(22) Date of filing: 30.12.2003
(51) Int. Cl.: A23K 1/00, A23K 3/03

(54) **Silage additive and a process for preparing silage using it**

(30) Priority: 14.01.2003 JP 2003005750; 23.06.2003 JP 2003178220
(71) Applicant: Ajinomoto Co., Inc., Tokyo 104-8315 (JP)
(72) Inventor: Takeda, Motoharu, c/o Ajinomoto Co., Inc., Kawasaki-shi Kanagawa 210-8681 (JP); Wakabayashi, Makoto, c/o Ajinomoto Co., Inc., Kawasaki-shi Kanagawa 210-8681 (JP); Gotou, Masakazu, Tsu-shi Mie 514-8507 (JP); Tsukahara, Akira, c/o Ajinomoto Co., Inc., Kawasaki-shi Kanagawa 210-8681 (JP); Yumura, Kouji, c/o Ajinomoto Co., Inc., Kawasaki-shi Kanagawa 210-8681 (JP)
(74) Representative: Strehl Schübel-Hopf & Partner

(57) **Abstract**

There is provided an inexpensive silage additive which improves silage fermentation and improves the nutrient quality for livestock animals.

The present invention relates to a silage additive which comprises a liquid by-product from an amino acid fermentation broth, said liquid by-product being acidified to a pH in the range of from 3.0 to 6.0.

## Description

The present invention relates to a silage additive which is effective for livestock animals and which makes lactic acid bacteria involving in the silage fermentation proliferate, makes it possible to save without spoiling the quality of silage raw material for a long period of term, depress aerobic deterioration of silage, improves the digestibility of a raw material and has an effect to impart the nitrogen component into the silage, and to a process for preparing a silage using it.

In the preparation of a silage which intends to store and preserve roughages such as various kinds of pasture grasses, forage crops such as barley, corn, common millet, feed rice and the like, food by-products such as tofu cake (soybean curd meal), sweet potato or potato starch pulp, liquor by-product and the like, food process residue discharged from food service industry and food distribution industry, etc., the silage raw material is placed in an anaerobic state by shutting air out whereby a lactic acid fermentation is induced and the pH is rapidly lowered to depress growth of aerobic bacteria at the initial stage of silage fermentation and the subsequent butyric acid fermentation which is the initial stage of the anaerobic fermentation thereby preserving the nutritional value and palatability of the feed. The ensilaging process has been commonly conducted in the livestock farms as a means to store or preserve feed raw material for ruminant, pig and poultry, and to improve its quality. In order to prevent some troubles encountered in the initial silage fermentation, there has been conducted the depression of a defective fermentation by acid-treatment such as formic acid, ammonium formate, citric acid and the like. For the purposes of promoting the main anaerobic fermentation subsequent to the initial silage fermentation and of promoting the proliferation of lactic acid bacteria adhered to the raw material and due to lowering of pH caused by the proliferation, various kinds of lactic acid bacteria preparations have been added as the starter for the proliferation, and molasses, glucose or the like have been added as a saccharide source.

In order to prevent the deterioration of the quality of silage by aerobic deterioration of silage induced after completion of the lactic acid fermentation or after the opening of silage, antiseptic such as propionic acid has been added. On the other hand, silage lactic acid fermentation has almost no ability to decompose the fiber component contained richly in plant raw material and accordingly for the purpose of improving the digestibility of the raw material an enzyme preparation, urea, ammonia and so on have been added singly or in admixture of them.

Lactic acid fermentation, which is the most important process for the quality of silage, is originally accomplished by naturally occurred lactic acid bacteria without adding any lactic acid bacteria preparation which is costly, since usually about 10³ lactic acid bacteria is adhered to natural raw material. However, the condition under which silage is prepared is various and the relationship of dominance is also various among and between lactic acid bacteria microflora and harmful fermentation bacteria microflora in the course of silage fermentation, and therefore there has been required a process by which lactic acid fermentation may be strongly promoted under any ensiling condition.

Roughages such as various kinds of grasses, forage crops such as barley, corn, common millet, feed rice and the like, food by-products such as tofu cake, sweet potato or potato starch pulp, liquor by-product and the like, remainder discharged from food service industry and food distribution industry, etc. have poor digestibility in most cases due to fibrous material, and therefore it is very important from the nutritional point of view to improve the digestibility of fibrous components. For this purpose, ammonia, urea, an expensive enzyme capable of decomposing fiber and so on are commercially available. However, ammonia treatment involves dangerous operation. There has been required development of such an additive that it has effects to improve the quality and digestibility of silage and it is cheap, easy to handle and not dangerous.

In case of food by-products such as tofu cake (soybean curd meal), sweet potato or potato starch pulp, liquor by-product feed and the like, remainder discharged from food service industry and food distribution industry, the putrefaction of them advances in several hours after their preparations due to high moisture and saccharide contents, and hence they have been treated as industrial waste matters despite high content of nutrient source for livestock. Food process residue have been required to be used as feed raw material in a cheap and simple procedure for preservation treatment.

An object of the present invention is to provide a silage additive for improving the quality of silage which is effective for livestock animals and which makes lactic acid bacteria in the silage fermentation proliferate, makes it possible to preserve to make good quality silage for a long period of term, depress aerobic deterioration of silage in order to prepare silage having a high lactic acid content and a high digestibility and being rich in the amount of nitrogen component.

Another object of the present invention is to provide a preparing process of a silage having a high feed value with an improved digestibility using said silage additive.

As a result of having ardently studied to achieve the above-described objects, the present inventors have found that a liquid by-product from an amino acid fermentation broth which is available industrially cheaply and in a large amount is suited to the objects and useful as a silage additive, and have completed the present invention.

That is, the first of the present invention is a silage additive which comprises a liquid by-product from an amino acid fermentation broth, said liquid by-product being adjusted to a pH in the range of from 3.0 to 6.0.

The second of the present invention is the silage additive wherein the liquid by-product from an amino acid fermentation broth is one from L-glutamic acid, L-lysine or L-phenylalanine fermentation broth.

The third of the present invention is a process for preparing a silage which comprises adding a liquid by-product from an amino acid fermentation broth to a silage raw material in an amount of 1.0-10.0 % based on fresh weight of the raw material, said liquid by-product being adjusted to a pH in the range of from 3.0 to 6.0 and subjecting the resultant mixture to anaerobic fermentation.

The fourth of the present invention is the process for preparing silage wherein lactic acid bacteria and a saccharide are further added to the silage raw material.

The fifth of the present invention is the process for preparing silage wherein the liquid by-product from an amino acid fermentation broth is one from L-glutamic acid, L-lysine or L-phenylalanine fermentation broth

The liquid by-product from an amino acid fermentation broth for use in the present invention is the one produced when an amino acid was removed from an amino acid fermentation broth by an appropriate separation procedure, said amino acid fermentation broth being obtained by culturing a an amino acid-producing microorganism in a culture medium containing various kinds of carbohydrates such as molasses, tapioca, corn and the like as a saccharide source and various kinds of ammonia nitrogen raw materials such as ammonia, ammonium sulfate and the like as a nitrogen source Specifically, the terms "liquid by-product" as defined herein means:
① A mother liquid, its concentrate and the liquid produced when the mother liquid or its concentrate was subjected to desalting treatment, said mother liquid being obtained when various kinds of amino acid fermentation broths wherein the amino acid moiety is an acidic amino acid such as glutamic acid or the like and a neutral amino acid such as phenylalanine, threonine, tryptophan or the like had been adjusted to an isoelectric pH of individual amino acids with a mineral acid such as sulfuric acid, hydrochloric acid or the like, whereupon said amino acid has crystallized out and said amino acid crystals have been separated from the broth by a solid-liquid separation procedure. Also, there may be taken a liquid and its concentrate, said liquid being produced when the microorganisms have been removed from the mother liquor, and further one produced when the liquid or its concentrate free from the microorganisms has been subjected to desalting treatment. As one included therein, there is Glutamic acid by-products (Condenced liquid) international feed No. (IFN) 5-01-595 which was registered as an international feed.
② An effluent or its concentrate and the liquid produced when the effluent or its concentrate was subjected to desalting treatment, said effluent being produced when a basic amino acid fermentation broth such as lysine fermentation broth has been adjusted to the prescribed pH with a mineral acid such as sulfuric acid, hydrochloric acid or the like, and then passed through a column packed with a strongly acidic cationic resin to absorb said amino acid on the cationic resin. Also, there may be taken a liquid and its concentrate, said liquid being produced when the microorganisms have been removed from the mother liquor, and further one produced when the liquid or its concentrate free from the microorganisms has been subjected to desalting treatment.

The pHs of these amino acid fermentation liquid by-products lie in an acidic side of 3.0-6.0 in all cases. The liquid by-products are rich in nitrogen including volatile ammonia nitrogen, amino acid organic nitrogen and nitrogen derived from the fermentation bacteria in addition to an amino acid. Also, they are rich in minerals like sulfur or chlorine derived from the inorganic acid used for pH adjustment of the amino acid fermentation broth as mineral. In addition, they contain as trace ingredients other minerals than described in the above, saccharides, organic acids, fermentation bacteria, etc. All of these ingredients are nutrients for silage fermentation microorganism and rumen microorganism.

As silage raw materials, there can be taken roughages such as various kinds of pasture grasses, rice straw and the like, concentrated feeds such as barley, corn, common millet, feed rice and the like, food by-products such as tofu cake, sweet potato or potato starch pulp, liquor by-product and the like, food process residue discharged from food service industry and food distribution industry, etc. The amino acid fermentation liquid by-product is added to the silage raw material in an amount of 1.0-10.0 % based on the fresh weight of the raw material, preferably the water content is adjusted to 60-70 wt. %. Saccharides and lactic acid bacteria may be further added depending on the necessity. After the mixture has been stirred uniformly, the resultant uniform mixture is ensilaged by a simple procedure that it is filled in a stationary or movable type of silo or otherwise in a silage bag made of a synthetic resin such as polyethylene, polypropylene or the like, deaerated, hermetically sealed and anaerobically fermented for about 40 days whereby silage raw material can be stored for a long period of term.

Even in the case where the silage was placed under the aerobic condition after opening, an aerobic deterioration of silage like proliferation of yeast and mold seldom occurs so that the present invention contributes greatly to the improvement and stability in the quality of silage.

As saccharides, there may be used molasses and a reducing sugar (for example, maltose, lactose, cane sugar, trehalose, glucose or the like). It is adequate that the additional amount of saccharides is 2 % or more based on the fresh weight of the raw material in considering the sugar content in the raw material.

A lactic acid bacteria preparation may be added as starter, if necessary. The kind of bacterium which may be utilized as suitable lactic acid bacteria preparation includes *lactobacillus plantarum, lactobacillus casei* and the like. It is adequate that the additional amount of the lactic acid bacteria preparation is 0.05-1.0 % based on the fresh weight of the raw material although it may be varied depending on the sugar content in the raw material.

In the case that molasses is used as a saccharide, it is desirable that the mixture proportion (weight ratio) of it to the amino acid fermentation broth liquid by-product is in advance adjusted so as to become 10-80 %.

The following Examples 1-9 illustrate the present invention specifically. Incidentally, the liquid by-product from amino acid fermentation broth used in Examples 1-7 and 9 is the one from L-phenylalanine fermentation broth which was registered as liquid by-product nitrogen fertilizer "PAL" (Reg. No. 74,220) and which has a pH of 4.5 and the total nitrogen content of 5.0 wt. % wherein the ammonia nitrogen content is 3.5 wt. % (hereinafter, referred to as "mother liquor").

### Example 1: Culture test of the isolated bacteria using typical silage lactic acid bacteria

There were prepared a series of mixed solutions of the mother liquor and molasses as a saccharide source in different proportions of 100:0 to 0:100 (weight ratio) and each of the mixed solutions was added to a 804 liquid culture medium (comprising 5 g of yeast extract, 5 g of peptone, 0.1 g of MgSO₄ • 7H₂O and 1,000 ml of distilled water, pH 7.0) in an amount corresponding to 0.5 wt. % in terms of reducing sugar, and the liquid stationary culture was conducted at 30 °C with lactic acid bacteria *Lactobacillus plantarum.* The molasses used herein is sugar mill by-product having the water content of 25-30 wt. % and the sugar content of about 50 wt. %.

As a control group, 804 liquid culture medium containing 0.5 wt. % of glucose was prepared.

The details of the weight ratios of the mother liquor to molasses and their abbreviations are shown in table 1.

**Table 1**

| Mixture ratios of mother liquor/molasses Mixed solutions and their abbreviations | | | | | | | |
|---|---|---|---|---|---|---|---|
| Abbreviation | Mother Liquor 100 | Mother Liquor 80 | Mother Liquor 60 | Mother Liquor 50 | Mother Liquor 40 | Mother Liquor 20 | Molasses |
| Mother liquor: Molasses | 100:0 | 80:20 | 60:40 | 50:50 | 40:60 | 20:80 | 0:100 |

At first as pre-culture, lactic acid bacteria Lactobacillus *plantarum* was cultured for 24 hours in a 804 liquid culture medium (10 ml) to prepare inoculum (pH 4.87).

Next, as the main culture, each of the culture mediums prepared above was seeded with 200 µl of bacteria *Lactobacillus plantarum* pre-cultivated in 804 liquid culture medium (10 ml) using a 16 Ø test tube and liquid stationary culture was conducted in a thermostatic water tank maintained at 30 °C .

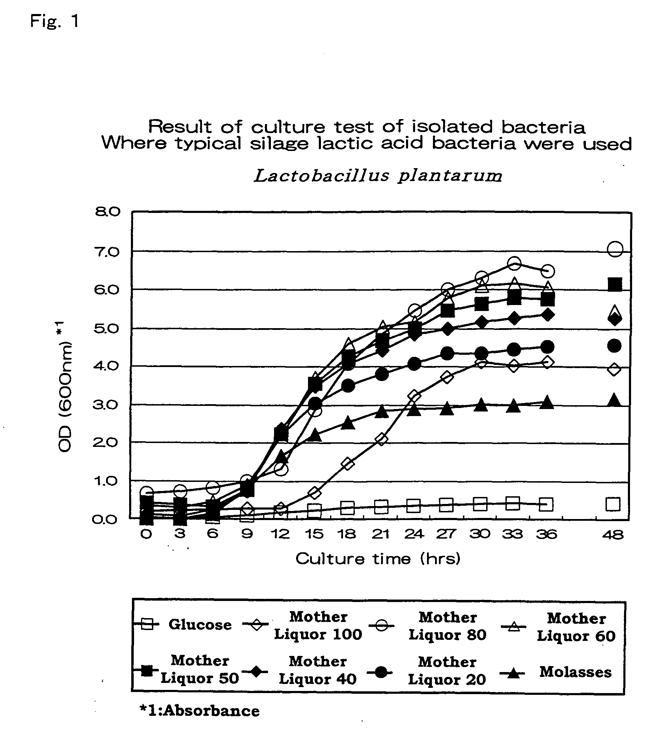

And, 200µl of sample was taken from this culture medium every 3 hours until 48 hours after cultivation and subjected to centrifugal separation at a rotation speed of 15,000 rpm for 5 minutes. Thereafter, the supernatant liquid was removed by decantation and 200 µ l of sterile distilled water was added to the reminder for washing and the mixture was again subjected to centrifugal separation. Finally, the supernatant liquid was again removed by decantation and the reminder was diluted with sterile distilled water so that absorbance can be measured at a wavelength of 600 nm. The measurement was conducted for absorbance (OD) at a wavelength of 600 nm. Fig. 1 indicates the changes in the absorbance by culture time. Incidentally, the increase in the absorbance indicates that *Lactobacillus plantarum* has proliferated.

It can be understood from the results shown in Fig. 1 that silage lactic acid bacteria rapidly proliferated by addition of the mother liquor and that especially the proliferation of lactic acid bacteria, which may be seen in the initial stage of silage fermentation, occurs between 5 and 9 hours.

It was confirmed that the addition of the mother liquor causes similar proliferative effects even in the culture of the isolated bacteria such as *clostridium butylicum,* which is dominant in butyric acid fermentation leading to a defective silage fermentation. However, the initiation time in its proliferation is 12-16 hours that is later than that in the proliferation of lactic acid bacteria, thus it is apparent that it has different proliferation-promoting action from lactic acid bacteria. It was confirmed that growth of these harmful fermentative bacteria are suppressed in the practical field when the mother liquor was added to barley whole crop silage, which is shown in the following Example.

### Example 2: Barley whole crop bottled silage test

There were prepared a series of mixed solutions of the mother liquor and molasses in different proportions of 80:20 to 20:80 (weight ratio), and each of the mixed solutions was added to barley whole crop in an amount of 3 % based on the fresh weight of barley whole crop. The resultant mixture was filled in a 1 L bottle (filling density of 500 g FW/L) to carry out silage test.

As a control group, silage with no additional/addition of mother liquor was prepared. The details of the weight ratios of the mother liquor to molasses and their abbreviations are shown in table 2.

**Table 2**

| Mixture ratios of mother liquor/molasses Mixed solutions and their abbreviations | | | | | |
|---|---|---|---|---|---|
| Abbreviation | Mother Liquor 80 | Mother Liquor 60 | Mother Liquor 50 | Mother Liquor 40 | Mother Liquor 20 |
| Mother liquor: Molasses | 80:20 | 60:40 | 50:50 | 40:60 | 20:80 |

Each silage was opened on 40th day after its preparation and samples were taken. Tenfold amounts of distilled water was added to the sample and the mixture was ground with a mixer and filtered out with gauze. The filtrate was subjected to centrifugal separation at a rotation speed of 15,000 rpm for 5 minutes at 5 °C. Twofold amounts of 6 % perchloric acid was added to the supernatant liquid and the mixture was stirred and then subjected to centrifugal separation under the same condition as in the above. The supernatant liquid was filtered out with a 45 *µ*m filter and the amounts of lactic acid and volatile fatty acids (hereinafter, these acids will be referred as "organic acid" collectively) were measured by liquid chromatography.

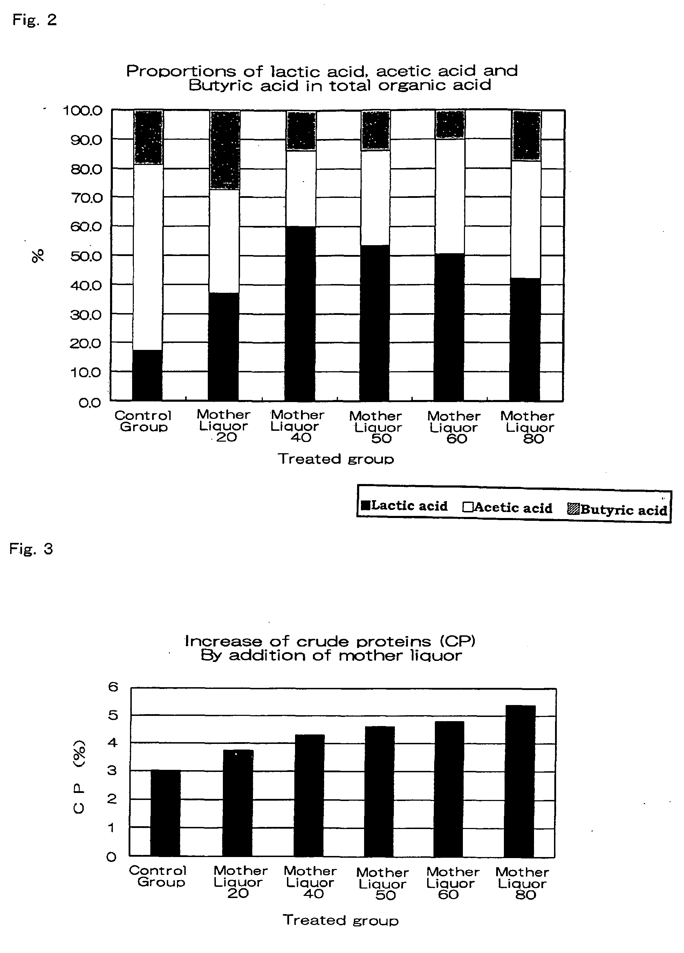

The amount f of organic acid produced and the percentage of dry matter loss are shown in table 3 and the proportions of lactic acid, acetic acid and butyric acid in total organic acid are shown in Fig. 2.

**Table 3**

| Amount of organic acid produced and percentage of dry matter loss | | | | | | |
|---|---|---|---|---|---|---|
| Sample tested | Control Group | Mother Liquor 20 | Mother Liquor 40 | Mother Liquor 50 | Mother Liquor 60 | Mother Liquor 80 |
| Amount of organic Aid (% FW^{*1}) | | | | | | |
| Lactic acid | 0.11 | 0.28 | 0.59 | 0.29 | 0.37 | 0.17 |
| Acetic acid | 0.27 | 0.18 | 0.17 | 0.12 | 0.19 | 0.11 |
| Butyric acid | 0.11 | 0.20 | 0.13 | 0.07 | 0.07 | 0.07 |
| Total | 0.49 | 0.66 | 0.89 | 0.48 | 0.63 | 0.35 |
| Percentage of dry Matter loss (%) | 17.6 | 13.4 | 17.3 | 16.4 | 13.8 | 12.0 |

| | | | | | | |
|---|---|---|---|---|---|---|
| *1: Fresh raw weight | | | | | | |

As is apparent from table 3 and Fig. 2, the proportion of lactic acid in total organic acid is higher in the mother liquor-treated groups than in the control group. This shows that the anaerobic fermentation by lactic acid bacteria has proceeded predominantly over harmful fermentation bacteria. As the result, the effect of reducing dry matter loss was achieved, too. Also, the proportion of acetic acid in the total organic acid is lower in the mother liquor-treated groups than in the control group. This suggests that homo type lactic acid bacteria capable of decomposing saccharide only into lactic acid has proliferated predominantly over hetero type lactic acid capable of decomposing saccharide into lactic acid, acetic acid, carbonic acid and water. This result partially explains the reason of reduction in dry matter loss, too.

Furthermore, the proportion of butyric acid in total organic acid is lower in the mother liquor-treated groups where the proportion of the mother liquor is 50 wt. % or more than in the control group. This result shows that the addition of such mother liquor causes effects of depressing a defective fermentation and of reducing dry matter loss rate.

Also, the nitrogen component may be imparted to the silage by the addition of the mother liquor so that the content of crude proteins in the silage is increased as the proportion of the mother liquor added increases. This result is shown in Fig. 3.

### Example 3: Culture test of the yeast isolated from silage

There were prepared a series of mixed solutions of the mother liquor and molasses in different proportions of 100:0 to 0: 100 (weight ratio) and each of the mixed solutions was added to a PYG liquid culture medium (comprising 10 g of peptone, 5 g of yeast extract and 1,000 ml of distilled water, pH 6.7-6.8) in an amount corresponding to 0.5 wt. % in terms of reducing sugar, and the liquid stationary culture was conducted at 30 °C using silage yeast.

As a control group, PYG liquid culture medium containing 0.5 wt. % of glucose was prepared.

The details of the weight ratios of the mother liquor to molasses and their abbreviations are shown in table 4.

**Table 4**

| Mixture ratios of mother liquor/ molasses Mixed solutions and their abbreviations | | | | | | | |
|---|---|---|---|---|---|---|---|
| Abbreviation | Mother Liquor 100 | Mother Liquor 80 | Mother Liquor 60 | Mother Liquor 50 | Mother Liquor 40 | Mother Liquor 20 | Molasses |
| Mother liquor: Molasses | 100:0 | 80:20 | 60:40 | 50:50 | 40:60 | 20:80 | 0:100 |

With respect to culturing method, first as the pre-cultivation silage yeast was cultured for 24 hours in PYG liquid culture medium (10 ml) to prepare inoculum (pH 6.7-6.8).

Next, as the main culture each of the above culture mediums having different proportions of the mother liquor was seeded with 200 µl of silage yeast pre-cultivated in PYG liquid culture medium (10 ml) using a 16 Ø test tube and shaking culture (200 times reciprocation motions/min.) was conducted in a incubator maintained to 30 °C.

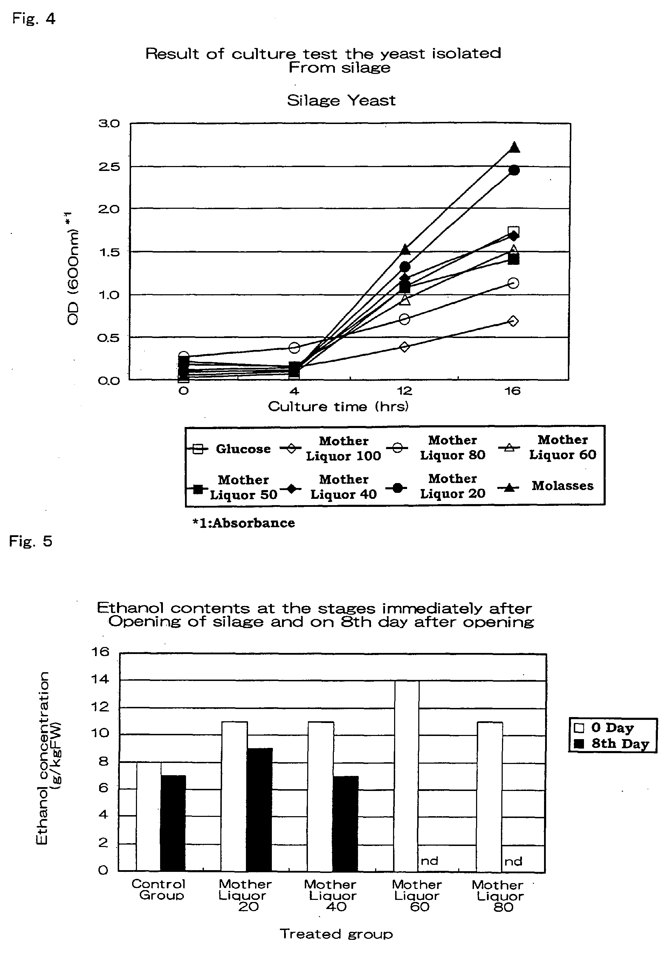

And, 100 *µ*l of samples were taken from this culture medium every 4 hours until 16 hours and was subjected to centrifugal separation at a rotation speed of 15,000 rpm for 5 minutes. Thereafter, the supernatant liquid was removed by decantation and 100 µl of sterile distilled water was added to the reminder for washing and the mixture was again subjected to centrifugal separation. Finally, the supernatant liquid was again removed by decantation and the reminder was diluted with sterile distilled water so that absorbance can be measured at a wavelength of 600 nm. The measurement was conducted for absorbance (OD) at a wavelength of 600 nm. Fig. 4 indicates the changes in the absorbance by culture time. Incidentally, the increase in the absorbance indicates that the silage yeast has proliferated.

It was confirmed from the result shown in Fig. 4 that the growth of yeast, which becomes problem in the initial silage fermentation, was significantly depressed in this culture of isolated yeast as the proportion of the mother liquor added to PYG culture medium increases.

Also, this test was conducted under an appropriate culture condition for yeast and the cultivation circumstance is substantially similar to that after the opening of silage in terms of, for example aerobic condition, adequate humidity, temperature and nutrients (lactic acid, residual sugar, etc.). Therefore, this result becomes a proof for depressing effects on the growth of yeast which is firstly activated after the opening of silage.

### Example 4: Evaluation test for quality of silage affected by aerobic deterioration of silage induced after the opening of it (measurement of the ethanol content)

Barley whole crop bottled silage was prepared and was opened on 40th day after its preparation. The ethanol contents were measured immediately after the opening of the silage and on 8th day after the opening. There were prepared a series of mixed solutions of the mother liquor and molasses with various proportions of 80:20 to 20:80 (weight ratio), and each of the mixed solutions was added to barley whole crop in an amount of 3 % based on the fresh weight of barley whole crop. The resultant mixture was filled in a 1 L bottle (filling density of 500 g FW / L) to prepare barley whole crop silage.

As a control group, silage with no mother liquor was prepared. The details of the weight ratios of the mother liquor to molasses and their abbreviations are shown in table 5.

**Table 5**

| Mixture ratios of the mother liquor/molasses Mixed solutions and their abbreviations | | | | |
|---|---|---|---|---|
| Abbreviation | Mother Liquor 80 | Mother Liquor 60 | Mother Liquor 40 | Mother Liquor 20 |
| Mother liquor: Molasses | 80:20 | 60:40 | 40:60 | 20:80 |

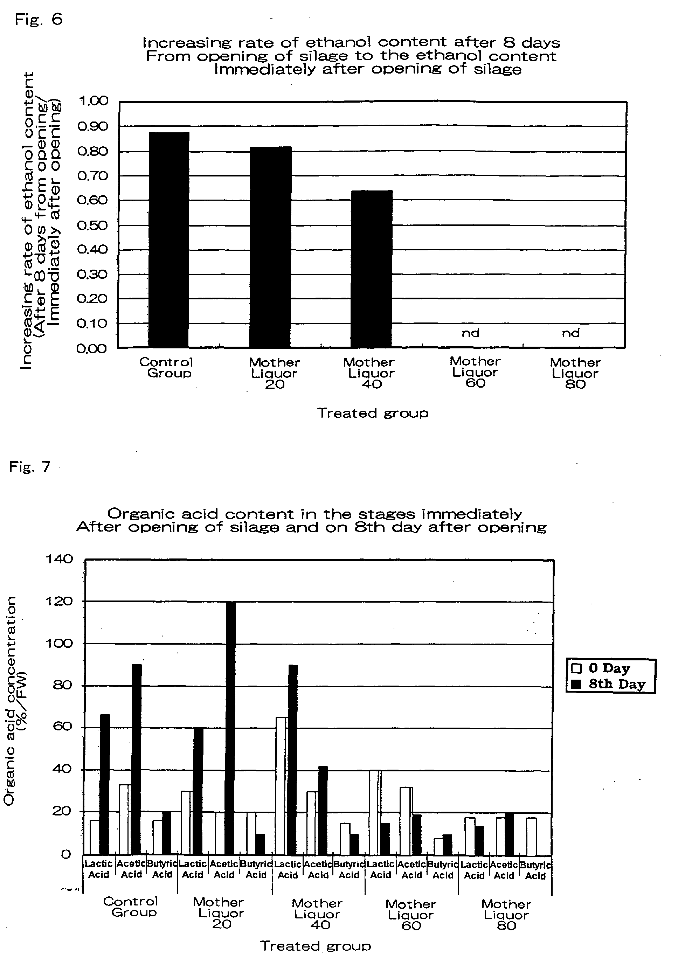

The silage of 40th day after its preparation was stirred for about an hour once a day for mixing treatment with air. Samples were taken immediately after the opening of the silage and on the 8th day after opening to measure the ethanol content. Fig. 5 shows the result of the measurements conducted immediately after the opening of the silage and on the 8th day after opening for the ethanol contents in the control group and the mother liquor-treated group silages. Also, the increasing ratios of the ethanol content (after 8 days from the opening/ immediately after the opening) in the control group and the mother liquor-treated groups are shown in Fig. 6.

It can be seen from Figs. 5 and 6 that the ethanol content after the opening of silage is lower as the proportion of the mother liquor in the mother liquor-treated groups is higher.

Ethanol is inherently produced by yeast or hetero type lactic acid bacteria during the silage fermentation. Both are facultative anaerobic microorganisms. Although silage is in aerobic state after the opening, when a material which is rich in residual sugar (in some cases, some sugar remains in kernels after the opening of silage) was subjected to the silage fermentation as in this test, the above-described microorganisms still continue their activities for a while. It can be understood from the result of this test that as the proportion of the mother liquor added is high the activities of these microorganisms are inhibited more effectively.

### Example 5: Evaluation test for quality of silage affected by aerobic deterioration of silage induced after the opening of it (measurement of organic acid content)

The barley whole crop silage prepared in Example 2 was used and opened on 40th day after its preparation. The organic acid contents were measured immediately after the opening and on the 8th day after opening.

As a control group, silage with no mother liquor was prepared. The details of the weight ratios of the mother liquor to molasses and their abbreviations are shown in table 6.

**Table 6**

| Mixture ratios of the mother liquor/molasses Mixed solutions and their abbreviations | | | | |
|---|---|---|---|---|
| Abbreviation | Mother Liquor 80 | Mother Liquor 60 | Mother Liquor 40 | Mother Liquor 20 |
| Mother liquor: Molasses | 80:20 | 60:40 | 40:60 | 20:80 |

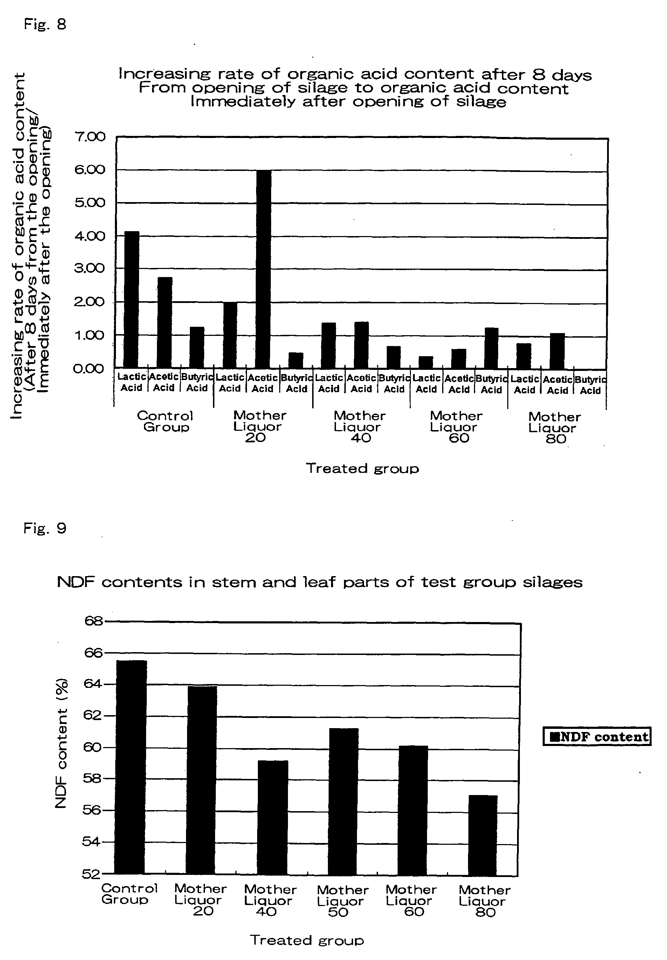

The silage of the 40th day after its preparation was stirred for about an hour once a day to effect mixing treatment with air. Samples were taken immediately after the opening of the silage and on the 8th day after opening to measure the organic acid content. Fig. 7 shows the result of the measurements conducted immediately after the opening of the silage and on the 8th day after opening for the organic acid contents in the control and the mother liquor-treated group silages. Also, the increasing ratios of the organic acid content (after the 8 days from the opening/immediately after the opening) in the control group and the mother liquor-treated groups are shown in Fig. 8.

It can be seen from Figs. 7 and 8 that the lactic acid and acetic acid contents after the opening of silage decrease as well as the increasing ratios of their organic acid contents as the proportion of the mother liquor in the mother liquor-treated groups are high.

When a material wherein the content of soluble sugar is high was subjected to the silage fermentation as in this test (in some cases, some sugar remains in kernels after the opening of silage), facultative anaerobic microorganisms including lactic acid bacteria still continue their activities for a while after the opening of silage. Lactic acid is formed by homo and hetero types of lactic acid bacteria while acetic acid is formed by hetero type of lactic acid bacteria and aerobic microorganisms. Also, after the opening of silage the activity of aerobic microorganisms is induced by activated yeast. At this stage, acetic acid is formed by yeast, too. That is, from the result of this test the higher proportion of the mother liquor added depresses the actions of facultative anaerobic microorganisms including lactic acid bacteria, of yeast and aerobic microorganisms. With respect to butyric acid bacteria, its action is depressed in an aerobic state in all the mother liquor-treated groups.

### Example 6: Evaluation test for quality of silage affected by secondary fermentation induced after the opening of silage (disappearance of mould colony)

There were prepared a series of mixed solutions of the mother liquor and molasses with various proportions of 80:20 to 20:80 (weight ratio), and each of the mixed solutions was added to barley whole crop in an amount of 3 % based on the fresh weight of barley whole crop. The resultant mixture was filled in a 1 L bottle (filling density of 500 g FW/L) to carry out barley whole crop bottled silage test.

As a control group, silage with no mother liquor was prepared. The details of the weight ratios of the mother liquor to molasses and their abbreviations are shown in table 7.

**Table 7**

| Mixture ratios of the mother liquor/molasses Mixed solutions and their abbreviations | | | | | |
|---|---|---|---|---|---|
| Abbreviation | Mother Liquor 80 | Mother Liquor 60 | Mother Liquor 50 | Mother Liquor 40 | Mother Liquor 20 |
| Mother liquor: Molasses | 80:20 | 60:40 | 50:50 | 40:60 | 20:80 |

With respect to the silage microorganism obtained by the barley whole crop bottled silage test, the number of mould colony was measured in nutrient agar medium (comprising 5g of peptone, 3g of beef extract, 15 g of gelatin and 1,000 ml of distilled water, pH 6.8). The measurement was conducted for silage samples taken immediately after the opening of silage, on 2^{nd} and 6^{th} days after opening, respectively.

200 ml of distilled water was added to 20 g of the silage samples and the mixture was stirred for a minute and thereafter filtered out with two gauzes. The cultivation was conducted in the above-described medium using the obtained filtrate. The number of mould colony was counted daily, and the number which reached plateau was used as the measurement of mould colony. The results are shown in table 8.

As it is apparent from the results shown in table 8, when the proportion of the mother liquor is 50 % or more, mould colony was not detected until 6^{th} day after the opening of silage.

**Table 8**

| Results of measurement for number of colony after opening of silage Unit: c.f.u. g⁻¹FW | | | | | | |
|---|---|---|---|---|---|---|
| Test group | Control Group | Mother Liquor 80 | Mother Liquor 60 | Mother Liquor 50 | Mother Liquor 40 | Mother Liquor 20 |
| Opening day | 7 × 10⁷ | n.d | n.d | n.d | n.d | 1 × 10⁸ |
| After 2 days | 7 × 10⁷ | n.d | n.d | n.d | n.d^{*1} | n.d |
| After 6 days | 7 × 10⁷ | n.d | n.d | n.d | 3 × 10⁹ | 7 × 10⁷ |

| | | | | | | |
|---|---|---|---|---|---|---|
| *1: Not detected | | | | | | |

This suggests that the growth of mould which contributes to aerobic deterioration of silage is depressed by the addition of the mother liquor.

### Example 7: Test for improving effect on in site rumen digestibility of barley whole crop silage

There were prepared a series of mixed solutions of the mother liquor and molasses with various proportions of 80:20 to 20:80 (weight ratio), and each of the mixed solutions was added to barley whole crop as the material in an amount of 3 % based on the fresh weight of barley whole crop. The resultant mixture was filled in a 1 L bottle (filling density of 500 g FW/L) to prepare barley whole crop bottled silage.

As a control group, silage with no mother liquor was prepared. The details of the weight ratios of the mother liquor to molasses and their abbreviations are shown in table 9.

**Table 9**

| Mixture ratios of the mother liquor/molasses Mixed solutions and their abbreviations | | | | | |
|---|---|---|---|---|---|
| Abbreviation | Mother Liquor 80 | Mother Liquor 60 | Mother Liquor 50 | Mother Liquor 40 | Mother Liquor 20 |
| Mother liquor: Molasses | 80:20 | 60:40 | 50:50 | 40:60 | 20:80 |

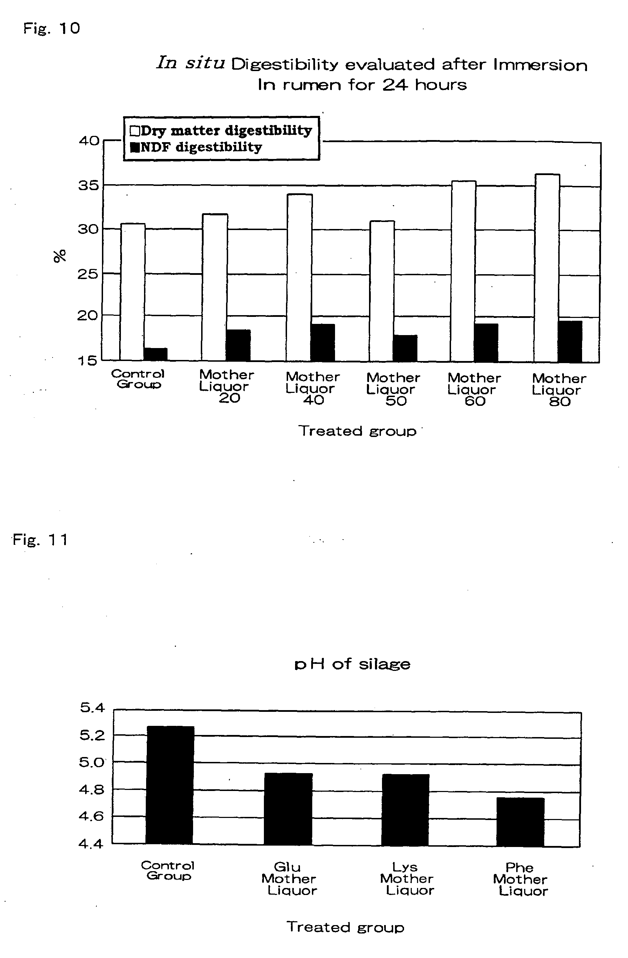

With respect to the silages prepared in the respective mother liquor-treated groups, kernels which have a good digestibility were removed from the respective barley whole crop, and the low digestible (fibrous) stem and leaf parts were used for the measurement of the content of neutral detergent fiber (NDF^{*1}) was measured. *In situ* rumen digestibility^{*2} was determined by soaking the silage in the rumen of the cattle equipped with a rumen fistula for 24 hours thereby the dry matter digestibility and NDF digestibility were evaluated. The results are shown in Figs. 9 and 10.
* 1: Neutral detergent fiber indicates the fiber components where ash was removed from the neutral detergent-treated insoluble residue and which comprises mainly cellulose, hemicellulose and lignin, each constituting the cell wall.
* 2: A procedure to measure the digestibility using a live animal

First, it was confirmed that the content of fiber component in the stem and leaf parts of barley whole crop during the silage storage was significantly decreased in the mother liquor-treated groups than in control group. This is apparent from Fig. 9, indicating that the amount of neutral detergent fiber (NDF) is decreased by the addition of the mother liquor.

Furthermore, the improving effect of the mother liquor on the dry matter digestibility and NDF digestibility was confirmed (see Fig. 10).

Cellulose and hemicellulose in roughage raw materials are bound with lignin to form a matrix structure with low digestibility and hence they are difficult to be utilized by rumen microorganisms. That is, these fibers are excreted without being utilized as the energy source for ruminant. However, it was observed by an electron microscope that a significant disintegration of fiber structure is caused by adding the mother liquor to roughage in an amount ranging from 1 to 10 wt. %. This shows that the mother liquor strongly contributes to the significant improvement of the digestibility.

### Example 8: Italian ryegrass bottled silage test

The liquid by-products from the following three kinds of amino acid fermentation broths were employed in this Example.
① Liquid by-product from glutamic acid fermentation broth, said liquid by-product having a pH of 4.7 and total nitrogen content of 6.2 wt. % wherein the ammonia nitrogen content is 4.3 wt. % (hereinafter, referred to as "Glu mother liquor") and being obtained from the glutamic acid fermentation broth by the procedures shown below.
   Glutamic acid fermentation broth was adjusted to isoelectric pH of said amino acid with sulfuric acid, the precipitated amino acid crystals was separated from the broth by a solid-liquid separation procedure whereby the obtained mother liquor was adjusted to a pH of around 5 with ammonia and subjected to desalting treatment and concentration.
② Liquid by-product from lysine fermentation broth, said liquid by-product having pH of 4.2 and total nitrogen content of 5.9 wt. % wherein the ammonia nitrogen content is 4.7 wt. % (hereinafter, referred to as "Lys mother liquor") and being obtained from the lysine fermentation broth by the procedures shown below.
   Lysine fermentation broth was adjusted to a pH of about 3 with sulfuric acid and then passed through a column packed with a strongly acidic cationic resin whereupon said amino acid was attached on the cationic resin, and the effluent was separated into the two fractions of bacterial cells and supernatant liquid by centrifugation separation. The supernatant liquid was adjusted to pH of about 5 with an aqueous sodium hydroxide solution and then subjected to desalting treatment and concentration. The resultant concentrate was mixed with the above bacteria cells.
③ The phenylalanine fermentation broth liquid by-product which was employed in Examples 1-7 (hereinafter, referred to as "Phe mother liquor".

Each of Glu mother liquor, Lys mother liquor and Phe mother liquor was added to Italian ryegrass in an amount of 3 % based on the fresh weight of Italian ryegrass. The resultant mixture was filled in a 1 L bottle (filling density of 760 g FW/L) to carry out silage test.

As a control group, silage with no mother liquor was prepared.

Each of the silages was opened on 40th day after its preparation and a sample was taken. The quantity of distilled water equal to 10 times the quantity of the sample was added to the sample, and the mixture was pulverized with a mixer and filtered out with gauze. The filtrate was subjected to centrifugal separation at a rotation speed of 15,000rpm for 5 minutes at 5 °C. Twofold amounts of 6 % perchloric acid were added to the supernatant liquid. The mixture was stirred and then subjected to centrifugal separation under the same condition as in the above. The supernatant liquid was filtered out with a 45 µ m filter to measure the pH and to determine volatile fatty acids using a liquid chromatography.

Fig. 11 shows the pHs of the respective silages of control group, Glu mother liquor-, Lys mother liquor- and Phe mother liquor-treated groups.

Fig. 12 shows total organic acid concentrations involving in the respective silages of the control group, the Glu mother liquor-, Lys mother liquor- and Phe mother liquor-treated groups.

Fig. 13 shows the proportions of lactic acid and acetic acid in total organic acid in the respective silages of the control group, the Glu mother liquor-, Lys mother liquor- and Phe mother liquor-treated groups.

As it is apparent from Figs. 11, 12 and 13, the amount of total volatile fatty acid formed and the proportion of lactic acid in total organic acid in the Glu mother liquor-, Lys mother liquor- and Phe mother liquor-treated groups are higher compared with those in the control group. This shows that these mother liquors have effects of promoting the silage lactic acid fermentation and of improving significantly the quality of silage.

### Example 9 : Sweet potato starch pulp bag silage test

Sweet potato starch is produced focusing on Kagoshima and Miyazaki prefectures in Japan. Sweet potato starch pulp which is by-product of the above starch was employed in this Example.

Table 10 shows the general constituent of sweet potato starch pulp employed in this example.

**Table 10**

| General constituent of sweet potato pulp | | | | |
|---|---|---|---|---|
| Moisture % | pH | Crude Protein % DM^{*1} | Crude Fiber % DM | Crude Ash % DM |
| 72 | 9.1 | 1.8 | 18.6 | 8.7 |

| | | | | |
|---|---|---|---|---|
| * 1 : Dry matter | | | | |

At first wheat bran was added to sweet potato starch pulp in an amount of 10% based on the fresh weight of sweet potato starch pulp for moisture adjustment.

Next, Phe mother liquor was added to the resultant mixture was adjusted moisture in an amount of 5% based on the fresh weight of the resultant mixture. The mixture was filled in a silage bag made of a polyethylene (filling density of 20 kgFW/bag), subjected to vacuum suction and sealed to carry out silage test.

As a control group, silage with no mother liquor was prepared.

In this example, lactic acid bacteria was further added to the control group and Phe mother liquor-treated group in an amount of 1 0 ⁵c.f.u/g F W based on the fresh weight of the resultant mixture.

Table 11 shows each of the control groups 1 and 2 and the mother liquor-treated groups 1 and 2.

**Table 11**

| | Control Group 1 | Control Group 2 | Treated Group 1 | Treated Group 2 |
|---|---|---|---|---|
| Mother Liquor | Not added | Not added | Added | Added |
| Lactic Acid Bacteria | Not Added | Added | Not Added | Added |

Each silage was opened on about 40th day after its preparation and sample was taken. The quantity of distilled water equal to 10 times the quantity of sample was added to sample, and the mixture was pulverized with a mixer and filtered out with gauze. The filtrate was subjected to centrifugal separation at a rotation speed of 15,000rpm for 5 minutes at 5 °C. Two fold amounts of 6% perchloric acid was added to the supernatant liquid. The supernatant liquid was stirred and then subjected to centrifugal separation under the same condition as in the above. The supernatant liquid was filtered out a 45 *µ*m filter to measure the pH and to determine organic acids using a liquid chromatography.

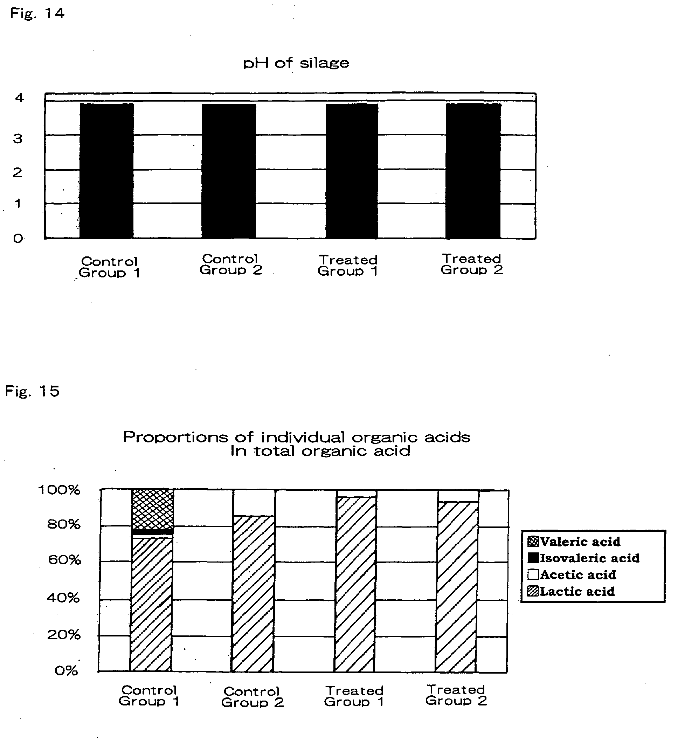

Fig. 14 shows the pHs of the respective silages of the control groups and the mother liquor-treated groups.

Fig. 15 shows the proportions of each organic acid in total organic acid in the respective silages of the control groups and the mother liquor-treated groups.

As it is apparent from Fig. 14, all of the control group and the mother liquor-treated group silages had pH under 4, and these silages were good silages. But as it is apparent from Fig. 15, the proportions of lactic acid in total organic acid are almost the same between the mother liquor-treated groups 1 and 2. The proportion of lactic acid in total organic acid was higher in order of the control group 1, control group 2 and the mother liquor-treated groups 2 and 1. This shows that the addition of the mother liquor as well as lactic acid bacteria has effects of promoting the silage lactic acid fermentation and of improving significantly the quality of silage.

### Effect of the Invention

By adding a liquid by-product from an amino acid fermentation to a silage raw material, there can be exerted effects to promote lactic acid bacteria fermentation in the silage fermentation and to cause the disintegration of the fiber firmly structurized in the raw material, that is to promote separation of cellulose and hemicellulose from lignin present in the feed raw material, thereby preparing a silage having long-term preservation property, high content of lactic acid, high digestibility and high content of nitrogen component. Also, the nitrogen source present in the amino acid fermentation liquid by-product may be effectively utilized in the present invention.

### Brief Explanation of Drawings

Fig. 1 is a graph showing changes in the absorbance by culture time in the case where silage lactic acid bacteria *Lactobacillus plantarum* was cultured using mother liquor alone, molasses alone, mother liquor-molasses mixed solutions or glucose alone as silage additives.
Fig. 2 is a graph showing the proportions of lactic acid, acetic acid and butyric acid in total organic acid involving in the silage, said silage being prepared when barley whole crop bottled silage test has been carried out using the mother liquor-molasses mixed solution containing different amounts of the mother liquor as silage additives.
Fig. 3 is a graph showing changes in the content of crude proteins in the silage by the proportion of the mother liquor added, the silage being prepared when barley whole crop bottled silage test was carried out using the mother liquor-molasses mixed solution containing different amounts of the mother liquor added as silage additives.
Fig. 4 is a graph showing changes in the absorbance by culture time in the case where silage yeast was cultured using mother liquor alone, molasses alone, mother liquor-molasses mixed solutions or glucose alone as silage additives.
Fig. 5 is a graph showing the ethanol contents measured immediately after the opening of silage and on the 8^{th} day in the control group and the mother liquor-treated groups.
Fig. 6 is a graph showing the increasing ratios of the ethanol content (after 8 days from the opening of silage/immediately after the opening of silage) in the control group and the mother liquor-treated groups.
Fig. 7 is a graph showing the organic acid contents immediately after the opening of silage and on the 8^{th} day in the control group and the mother liquor-treated groups.
Fig. 8 is a graph showing the increasing ratio of the organic acid content (after 8 days from the opening of silage/immediately after the opening of silage) in the control group and the mother liquor-treated groups.
Fig. 9 is a graph showing the NDF contents in stem and leaf parts in the respective silages of the control group and the mother liquor-treated group.
Fig. 10 is a graph showing dry matter digestibility and NDF digestibility determined after immersion in the rumen of the cattle for 24 hours using in situ rumen digestibility technique for the respective silages of the control group and the mother liquor-treated groups.
Fig. 11 is a graph showing the pH of the silage prepared when Italian ryegrass bottled silage test has been carried out using each of the three kinds of amino acid fermentation broth liquid by-products as silage additives.

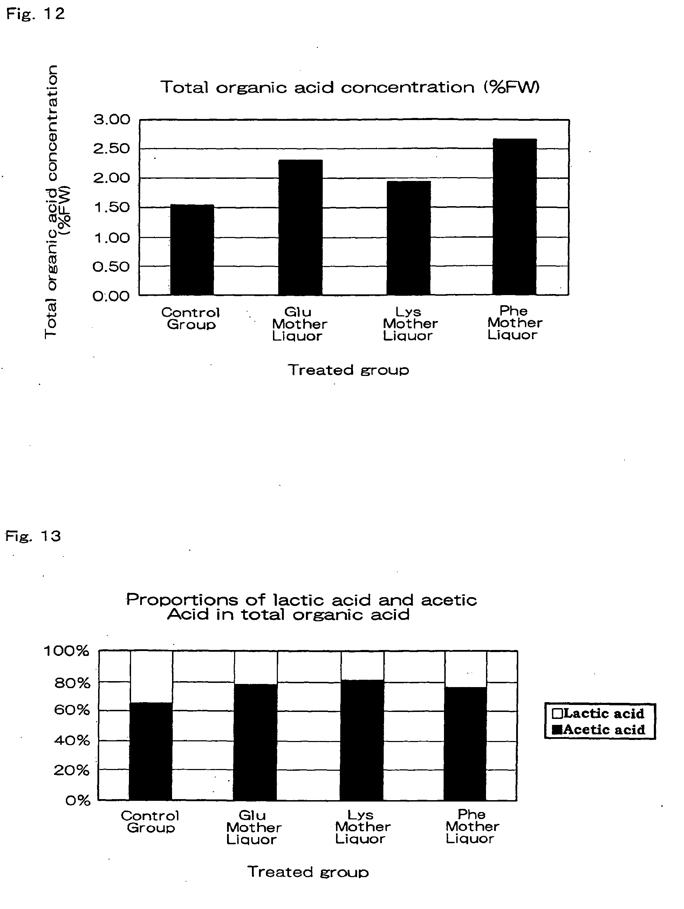

Fig. 12 is a graph showing the total organic acid concentrations in the control group and in the treatment groups of each of the three kinds of amino acid fermentation broth liquid by-products.
Fig. 13 is a graph showing the proportions of lactic acid and acetic acid in total organic acid in the control group and in the treatment groups of each of the three kinds of amino acid fermentation broth liquid by-products.
Fig. 14 is a graph showing the pH of the control group and the mother liquor-treated group silages prepared when sweet potato starch pulp bag silage test has been carried out.
Fig. 15 shows the proportions of individual organic acids in total organic acid in the control group and the mother liquor-treated group silages prepared when sweet potato starch pulp bag silage test has been carried out.

## Claims

1. A silage additive which comprises a liquid by-product from an amino acid fermentation broth, said liquid by-product being acidified to a pH in the range of from 3.0 to 6.0.

2. The silage additive as claimed in claim 1 wherein the liquid by-product from an amino acid fermentation broth is the one from L-glutamic acid, L-lysine or L-phenylalanine fermentation broth.

3. A process for preparing silage which comprises adding a liquid by-product from an amino acid fermentation broth to a silage raw material in an amount of 1.0-10.0 % based on fresh weight of the raw material, said liquid by-product being acidified to a pH in the range of from 3.0 to 6.0 and subjecting the resultant mixture to anaerobic fermentation.

4. The process as claimed in claim 3 wherein lactic acid bacteria and saccharides are further added to the silage raw material.

5. The process as claimed in claim 3 or 4 wherein the liquid by-product from an amino acid fermentation broth is the one from L-glutamic acid, L-lysine or L-phenylalanine fermentation broth.
